# EUROPEAN PATENT APPLICATION

(11) **EP 1 129 844 A1**
(43) Date of publication of application: **05.09.2001**
(21) Application number: 00104131.8
(22) Date of filing: 29.02.2000
(51) Int. Cl.: B32B 17/10, B44C 1/17, E06B 3/66, B41M 5/035

(54) **Composite stratified decorated panel from glass and/or transparent plastics**

(71) Applicant: BREVET 2000 HOLDING S.A., 2449 Luxembourg (LU)
(72) Inventor: Manfré, Giovanni, 37042 Caldiero (VR) (IT)
(74) Representative: Freylinger, Ernest T.

(57) **Abstract**

A composite stratified decorated panel from glass and/or transparent plastics variously decorated with one- or full-color decorations, particularly for use in building, transport, and the like, comprising a first pane from glass or transparent plastics, a second pane from glass or transparent plastics or thin film and a transparent film or plastics sheet, for instance polyethylene terephthalate (PET), bearing a decoration obtained with sublimable colors placed between said two panes from glass and/or transparent plastics, stably associated to said panes by means of glue or adhesive layers, for instance polyurethane and heat lamination.

## Description

The present invention relates to a composite stratified panel from glass and/or transparent plastics, variously decorated with one- or full-color decorations, in particular for structural and/or decorative use in' building, transport, industrial fields, furniture, and the like.

The invention also relates to a process for the realization of said composite, stratified, decorated panel.

As is known, glazing according to the known art can be obtained by means of the following technologies:
Silk printing on glass, also with various colors by means of ceramic coatings (through an appropriate sequence of frames). Apart from the cost of the investment, the silk printing process has a very complex nature, needs high temperatures for the evaporation of solvents and the ceramization; the definition is not very high because of the profilometric roughness (banana-peel), which is typical of ceramic material silk printing. The utilizable colors are limited; besides, lead presence often limits such process for ecological reasons;
Chemical engraving of the glass surface with special aggressive materials. The colors utilizable are very limited, as well as the definition and the possibility of particular scenographies;
Coloring the glass surface with aggressive pigments, or through deposition technologies (e.g., vacuum arc deposition coating), but coloring is very limited as concerns the number and the definition;
Lamination of colored paper of a decorative type obtained by printing. The definition of the image is very poor, especially in case of full-colors, and therefore decoration is limited to one-color patterns, also very complex and particularly fancy, such as lace patterns. The colors utilized may be either light or dark, but in any case always of one only color; this lamination technology includes also the decoration made directly on the adhesive, which however allows only a limited number of colors and very small images, given the low definition of the outline of greater decorative patterns.

Other less known technologies are possible, such as the working of glasses of several colors which may offer in the mass multicolor glasses similar to those of art-vases and colored window panes in churches or buildings.

These technologies are very complex, with remarkable limitations as concerns the range of decorations that can be obtained, the colors, the aesthetic aspect and the applications of the finished product and the cost.

Object of the present invention is to realize and provide a one- or full-color transparent panel from glass and/or plastics, with images of any types, shapes' and colors, with a high definition of the transparency/opaqueness ratio.

Another object of the invention is to realize a transparent decorative panel having mechanical characteristics adequate and such as to cause the panel to become a structural and safety element in its characteristics both in building and other sectors.

A further object of the invention is to realize a transparent decorative panel having even a very low surface reflectivity, such as to emphasize the decorative colors also in very luminous rooms, with either sun light or artificial light, and with the possibility of obtaining also decorations with images of high artistic tenor, either modern or classic.

These and still other objects and the related advantages which will be better understood thanks to the following description are achieved by a composite stratified panel from glass and/or transparent plastics variously decorated with one- or full-color decoration, particularly for use in building, transport and the like, which panel, according to the present invention, comprises:
- a first pane from glass or transparent plastics,
- a second pane from glass or transparent plastics,
- a film or sheet from transparent plastics bearing said decoration, placed between said two panes from glass and/or transparent panes and stably associated thereto by means of layers of a suitable adhesive through calendering or heat lamination.

Said second pane from transparent plastics may be constituted by a very thin film from plastics in the back part close to the plastic film bearing the decoration, in particular when the decorative panel has simply to cover the internal walls of a building, without requirements of a structural nature.

Besides, said first pane from transparent plastics may advantageously be a pane from polycarbonate or polyester, and said second pane from transparent plastics may also be selected from a polycarbonate or a polyester pane.

More particularly, said film or sheet from transparent plastics bearing said decoration is a film from polyester, such as polyethylene terephthalate (PET).

Advantageously, according to the present invention, said decoration on said film is obtained with sublimable colors with the transfer technique, for instance according to the processes described in the European patent applications EP-A-98100975.6 and/or EP-A-98112232.8.

The use of the transfer technology allows to decorate a film from transparent plastics having characteristics of low optic diffraction in both directions (stretching direction and the direction perpendicular to the same); limited shrinkage after a heat treatment in both directions; easy transfer color absorption by ablation; mechanical characteristics suitable to sustain the calendering or lamination process with two panes from glass or transparent plastics; high resistance to deterioration from chemical attack by the adhesive of the stratified glass or plastics. Besides, the transformation process is very simple, provides a high definition quality of printing and low realization costs for both the architectural and the industrial sectors.

Always according to the present invention, said adhesive layers are selected from polyvinylbutyrale (PVB) and polyurethane (PU).

Advantageously, between said film from polyester such as polyethylene phthalate (PET) and said adhesives a primer is interposed, e.g. a silane, polyurethane, epoxy, acrylic primer, to impart a greater resistance to delamination between the decorated PET film and the adhesive layers.

Polyvinyl butyrale (PVB), usually utilized in the fabrication of stratified glasses, and polyurethane' (PU), particularly used in the fabrication of high resistance, stratified, multilayered glasses and of basic importance in the fabrication of glass-plastics stratified glazing, were found to be particularly suitable adhesives.

Of the two basic adhesives, PU has a lower chemical aggressiveness with respect to transfer decoration, and a lower lamination temperature that allows to overcome the wrinkling problems of the PET film, providing laminations without defects and having a very high definition in the transparency/opaqueness ratio.

The decoration may be realized with photo-sensitive colorants, obtaining in this way a decoration whose intensity and color change according to the conditions of ambient light, and therefore is particularly suitable for some applications, for instance, structural signals, displays, laboratories, vehicles and the like, exposed to direct sun light.

A process for the realization of said composite stratified decorative panel according to the present invention includes the following steps:
1. Preparation step of the sandwich composed by two layers of the selected adhesive material (PVB or PU or other ones), which contain, sandwiched in the central part, said PET film, obtained with the decoration by a transfer process. Before the introduction between said two adhesive layers, both sides of the PET film are coating-primed with primers of the silane or epoxy or acrylic or polyurethane type.
   Primers, besides creating a suitable interface between the adhesive layers and the decorative PET, provides also a better adhesion between PET and the adhesive layers, which is considered to be of the essential for the purposes of the maximum reduction in possible wrinkling and the maximum definition of the decorative image on PET.
2. Step of the so-called fabrication of the pack to be laminated. The sandwich prepared in step 1, placed between said first and second panes from glass or transparent plastics, is introduced in a bag from plastics of suitable size in whose inside, before its closing, air is sucked to prepare a vacuum ambient such as to remove all residual air pockets in the inside of the sandwich. The vacuum to be obtained within the bag ranges from 0,5 to 0,8 bars at room temperature.
3. Lamination step in an autoclave of the pack of point 2. Said bag containing the sandwich in its inside is placed in an autoclave, where it will undergo a heating' and cooling cycle in conditions of temperature and pressure prefixed according to the mass and the size.
   The thermal cycle starts from ambient temperature and reaches the maximum temperature that ranges between 80°C and 130°C, according to the type of adhesives, the size and the mass of the sandwich; the temperature increase takes place within a time that corresponds to 1-2°C/min, with an accurate control of thermocouples.
   Upon reaching of Tₘₐₓ, the temperature in the autoclave remains constant for a period of 30-90 minutes, according to the fixed cycle that depends on the type and the mass of the sandwich and the bag; the cooling step takes always place in the autoclave by natural convection once the heating is off, and generally lasts for a time slightly longer than the heating step, i.e. it cools by reducing temperature of 1-2°C/min.
   The parallel pressure cycle in the autoclave works in the following manner: during the heating step, the pressure remains at room pressure up to temperatures of 40-50°C and gradually increases up to 12-14 bars on reaching Tₘₐₓ, remains constant during the step of stationary temperature and the first cooling step until it reaches the temperature of 50-40°C, to reduce to ambient temperature almost instantaneously in the last cooling step.
   Besides the temperature-pressure cycle in the autoclave and the creation of the ambient in the inside of the bag during the preparation of the sandwich, the following process and material parameters have proved important in order to obtain the maximum reduction in the wrinkling of PET decorative surface, due to the micro-wrinkling, and the maximum possible definition of the decorative image:
   - high planarity of the interfaces and particularly those that are in touch with two surfaces, glass and PET, of each adhesive layer; the planarity of the surfaces of the adhesives is obtained by means of mechanical pressing on particularly smooth surfaces having a very low micro-wrinkling;
   - adhesive materials with minimum slope curve-strain (low modulus of elasticity);
   - absorption of H₂O as low as possible, in any case lower than 0,5%;
   - thermal expansion coefficients as low as possible, in any case lower than PET's, i.e. in the order of 10⁻³;
   - chemical non aggressiveness of adhesive materials comprised that of plasticizers and primers, also at high temperatures of 80-100°C.

## Claims

1. A composite stratified panel from glass and/or transparent plastics, variously decorated with one- or full-color decoration, particularly for use in building, transport, and the like, **characterized in that** it comprises:
- a first pane from glass or transparent plastics,
- a second pane from glass or transparent plastics,
- a film or sheet from transparent plastics bearing said decoration, placed between said two panes from glass and/or transparent panes and stably associated thereto by means of layers of suitable adhesives through calendering or heat lamination.

2. The composite stratified panel according to claim 1,
**characterized in that** said second pane from transparent plastics is constituted by a thin plastic film.

3. The composite stratified panel according to claim 1,
**characterized in that** said first pane from transparent plastics is a polycarbonate or polyester pane.

4. The composite stratified panel according to claim 1,
**characterized in that** said second pane from transparent plastics is a polycarbonate or polyester pane.

5. The composite stratified panel according to claim 1,
**characterized in that** said film or sheet from transparent plastics bearing said decoration is a polyester film, such as polyethylene terephthalate (PET).

6. The composite stratified panel according to claims 1 and 5, **characterized in that** said decoration on said film or sheet from transparent plastics is realized' with sublimable colors, by the transfer technique.

7. The composite stratified panel according to claim 1,
**characterized in that** said glue or adhesive is selected from polyvinylbutyrale (PVB) and polyurethane (PU).

8. The composite stratified panel according to claims 2 and 4, **characterized in that** a primer is interposed between said film from polyester such as polyethylene terephthalate (PET) and said glue or adhesive.

9. The composite stratified panel according to claim 1,
**characterized in that** said decoration is realized by means of photo-sensitive colorants, obtaining in this way a decoration whose intensity and color change according to the light conditions.

10. A process for the realization of a composite stratified panel according to claim 1, **characterized in that** it comprises the following steps:
- application of a first layer of adhesive, such as polyvinylbutyrale (PVB) or polyurethane (PU) on a first pane from glass or transparent plastics;
- coating a sheet or film from polyethylene terephthalate (PET) decorated with sublimable colors on said first pane;
- application of a second pane from glass or transparent plastics, also provided with a second adhesive layer such as polyvinylbutyrale (PVB) or polyurethane (PU), on said sheet or film from decorated polyethylene terephthalate;
- removal of air and possible air pockets from the so obtained sandwich, placing said sandwich in an airtight vacuum envelope;
- submitting the so obtained sandwich to heat lamination, at a temperature ranging from 80°C and 130°C, with pressures comprised between atmosphere pressure and 20 bars.

11. The process according to claim 10, **characterized in that** said sheet from decorated polyethylene terephthalate (PET) is previously treated with a primer of the silane, epoxy, acrylic or polyurethane type.
